Europäisches Patentamt

(19) European Patent Office

Office européen des brevets

(11) Numéro de publication: **0 154 931 B1**

(12) **FASCICULE DE BREVET EUROPEEN**

(45) Date de publication de fascicule du brevet:
**21.08.91**

(51) Int. Cl.⁵: **B32B 1/08**, B32B 1/10, B21C 37/06

(21) Numéro de dépôt: **85102510.6**

(22) Date de dépôt: **06.03.85**

(54) **Procédé de fabrication d'un tube composite.**

(30) Priorité: **16.03.84 CH 1342/84**

(43) Date de publication de la demande:
**18.09.85 Bulletin 85/38**

(45) Mention de la délivrance du brevet:
**21.08.91 Bulletin 91/34**

(84) Etats contractants désignés:
**AT BE CH DE FR GB IT LI LU NL SE**

(56) Documents cités:
**EP-A- 0 024 220**
**EP-A- 0 067 919**
**AU-B- 37 884**
**DE-A- 2 923 544**
**FR-A- 2 516 443**

**PATENT ABSTRACTS OF JAPAN, vol. 7, no.
79 (M-204[1224], 31 march 1983; & JP-A-58
6723 (SHIN NIPPON SEITETSU K.K.)
14-02-1983**

**Idem**

(73) Titulaire: **PABRECO S.A.**
**5, rue Faucigny**
**CH-1700 Fribourg(CH)**

(72) Inventeur: **Bujes, Georges**
**16, route de Planafin**
**CH-1723 Marly(CH)**

(74) Mandataire: **Moinas, Michel**
**Moinas & Cie 42, rue Plantamour**
**CH-1201 Genève(CH)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

**Description**

La présente invention se rapporte à un procédé de fabrication d'un tube composite plastique - métal - plastique.

On connaît de tels tubes composites, qui sont décrits par exemple dans l'exposé d'invention EP 0 067 919.

En ce qui concerne les procédés de fabrication, on peut signaler les exposés d'invention DE 2 923 544 et EP 0 024 220. Dans le texte allemand, on décrit un procédé dans lequel une couche intermédiaire en matière plastique est co-extrudé sur un tube interne, lui-même en matière plastique, le tout étant recouvert d'un tube métallique. Ce tube métallique subit une opération d'étirage et d'allongement. Dans le texte européen, on décrit un procédé dans lequel deux couches de matières plastiques sont extrudées à l'intérieur d'un tube métallique.

Dans ces deux exposés d'invention, on présente donc des procédés qui peuvent apporter une solution à la fabrication de tubes comprenant deux couches plastiques à l'intérieur et un tube métallique à l'extérieur.

L'invention résoud tout au contraire le problème de la fabrication d'un tube composite renforcé par une âme métallique noyée dans la matière plastique. Ainsi le tube métallique assure la rigidité ou la semi-rigidité nécessaire sans être exposé à la corrosion ou directement aux sollicitations extérieures.

Le procédé selon l'invention, pour la fabrication d'un tube composite plastique - métal - plastique, consiste à extruder un tube plastique intérieur et à former autour de celui-ci un tube métallique, qu'on recouvre d'une couche plastique extérieure. On forme le tube métallique à un diamètre intérieur sensiblement supérieur au diamètre extérieur du tube plastique intérieur, on ferme le tube métallique par soudage bord à bord, puis on réduit l'excédent de diamètre du tube métallique. Il se distingue en ce qu'on reduit l'excédent de diamètre sans étirage et allongement de celui-ci. La réduction de diamètre s'est effectuée par calibrage.

Comme on le constate, la fabrication est réalisée en continu.

Avantageusement, on intercale un réseau tissé ou non tissé, par exemple une réseau textile, entre le tube métallique et la couche plastique extérieure. On peut intercaler entre le tube plastique intérieur et le tube métallique, respectivement entre le tube métallique et la couche plastique extérieure, un revêtement adhésif, notamment si les plastiques utilisés n'ont pas de propriétés auto-adhésives au métal.

Par "diamètre sensiblement supérieur", on entend signifier une valeur comprise entre 0,5 et 5 %, de telle façon que le tube métallique, lors de la réduction de diamètre, puisse adhérer définitivement au tube plastique intérieur. Le tube métallique ne doit subir ni étirage ni allongement. Il adhère au tube plastique intérieur par déformation plastique ou élastique du tube métallique proprement dit et/ou du tube plastique intérieur.

De préférence, la fermeture du tube métallique, bord à bord et sans aucun recouvrement ni chevauchement, est réalisée par soudage au plasma sous protection gazeuse, c'est-à-dire sous atmosphère inerte, par exemple d'azote ou d'hélium. Cette fermeture peut être également assurée par soudure laser.

L'excédent de diamètre du tube métallique par rapport au tube intérieur plastique est calculé pour que ce tube métallique ne soit pas en contact avec le tube intérieur plastique, au moins au niveau des bords où la soudure va être réalisée. Il faut éviter en effet, et c'est là un avantage déterminant de l'invention, que la ligne de soudure puisse affecter le tube intérieur, cette ligne risquant de subir un échauffement intense lors de la soudure. L'espace ménagé évite la transmission de chaleur perpendiculairement, c'est-à-dire en direction du tube plastique intérieur, et assure au contraire une bonne dissipation dans toute la masse du tube métallique.

En revanche, une fois la soudure réalisée, le calibrage a pour effet de mettre en contact le tube métallique avec le tube intérieur plastique et, le cas échéant, la substance adhésive intercalée entre eux. On a alors intérêt à chauffer l'ensemble, par exemple par application de hautes fréquences, pour activer la substance adhésive.

Le tube plastique intérieur peut être constitué de polyoléfines, matières plastiques fluorées, polyamides, élastomères ou autres matières compatibles avec le procédé de fabrication et les résultats recherchés.

La couche plastique extérieure peut être constituée des mêmes matériaux, adaptés aux nécessités de fabrication et de fonctionnement du tube par rapport à son milieu ambiant.

Le tube métallique peut être en aluminium ou alliage d'aluminium ou en tout autre matériau susceptible, selon son épaisseur, d'accepter un calibrage sans étirage ni allongement.

L'adhésif est adapté aux composants utilisés. Cela peut être, par exemple pour les polyéfines, un ionomère, un EVA, un polyéthylène modifié selon les critères de tenue à la température recherchée.

Le réseau peut être de nature textile ou métallique. Il est choisi selon les critères de résistance à la pression recherchés pour le tube. Ainsi, pour le sanitaire, on peut utiliser un réseau de type polyester stabilisé ou de polyamide. L'utilisation d'un réseau métallique qui peut être appliqué en couches successives est réservé aux applications haute pression au-delà de 300 bars.

Le choix des matériaux constitutis relève à la fois de la nature du fluide transporté et de l'usage qu'on désire faire du tube composite, notamment en matière de rigidité ou semi-rigidité, tenue mécanique, tenue à la pression et résistance à la corrosion extérieure.

D'autres variantes avantageuses, en ce qui concerne notamment les traitements de surface des tubes et les couches constitutives, sont présentées dans les lignes qui suivent, qui décrivent le processus de fabrication proprement dit.

Ce processus est d'ailleurs illustré, à titre d'exemple, dans le dessin annexé où :

- la figure 1 est un diagramme général de la ligne de fabrication selon l'invention,
- la figure 2 est un schéma perspectif simplifié de la ligne de fabrication du tube,
- la figure 3 est une vue en coupe axiale du même tube à différents stades de la fabrication,
- la figure 4 est une vue "épluchée" du tube achevé.

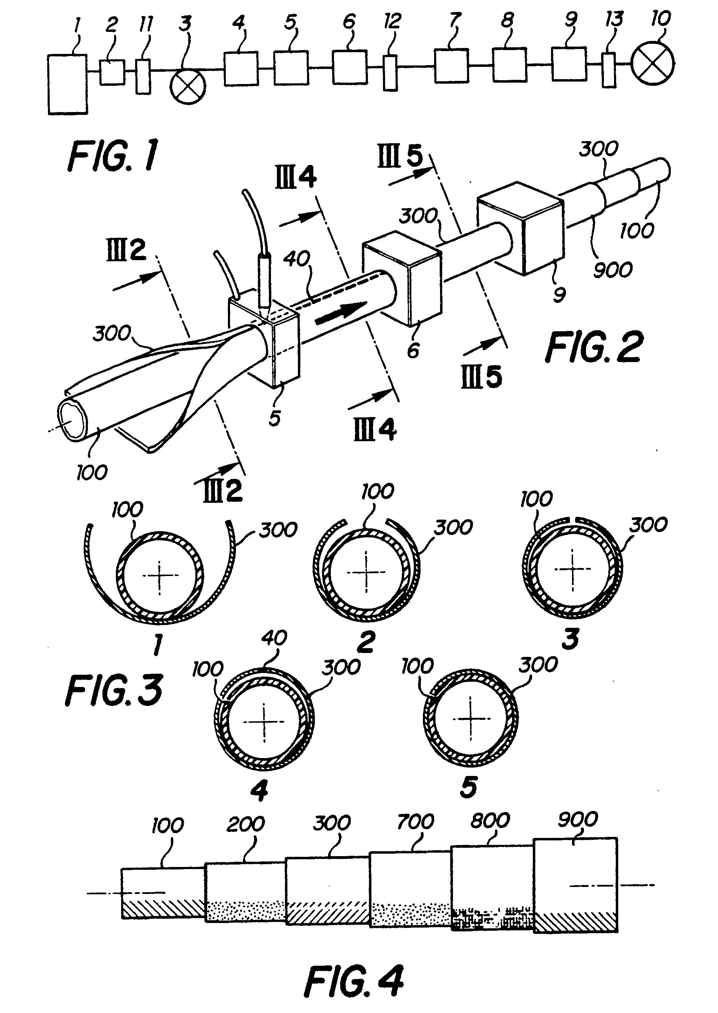

Ces illustrations sont faites en relation avec un tube composite préféré où le tube intérieur est en polyéthylène ou polyéthylène réticulé, le tube métallique est un alliage d'aluminium et la couche extérieure est de même nature que le tube intérieur. Sur la figure 4, on a également représenté le réseau et les adhésifs intercalaires, qui n'apparaissent pas sur les figures 2 et 3 pour une meilleure clarté.

Sur une unité de production en continu, on dispose à l'origine une extrudeuse 1 qui réalise le tube plastique intérieur 100 avec les critères de dimensionnement nécessaires.

Une enduction 200 (adhésif) est assurée par une tête d'extrusion 2 transversale alimentée par une extrudeuse. Avantageusement, le tube et l'enduction peuvent être réalisés en une seule opération au moyen de deux extrudeuses alimentant une tête commune (co-extrusion).

La feuille métallique 300, avant formage doit être correctement dégraissée et peut être traitée sur ses deux faces par des procédés d'oxydation (par voie thermique ou électrique) créant ainsi des couches superficielles d'épaisseur moléculaire ou plurimoléculaire.

La feuille métallique 300 ainsi traitée reçoit avec précision le tube plastique 100 revêtu de son adhésif 200 puis passe dans un poste de formage 4 où elle est formée de façon à créer un tube 300 sans recouvrement. Comme précédemment indiqué, ce tube métallique 300 a alors un diamètre légèrement supérieur à celui du tube plastique intérieur 100 disposé excentriquement dans celui-ci. Ainsi le tube métallique 300 est en contact avec le tube plastique 100 dans la partie opposée à la ligne de soudure, seulement.

On procède alors au soudage bord à bord par soudure 40 au plasma sous atmosphère inerte d'hélium ou d'azote (poste 5).

Le tube ainsi formé passe alors dans poste de calibrage 6 muni de galets motorisés qui mettent le tube d'aluminium 300 en contact avec le tube plastique intérieur 100 sur toute sa surface.

Le tube ainsi réalisé est soumis à une élévation de température à travers une bobine à hautes fréquences qui active l'adhésif.

Au poste suivant et selon les traitements réalisés sur l'aluminium avant formage, on peut assurer une nouvelle élévation de température superficielle sur le tube aluminium, par exemple par flammage, la surface extérieure passant dans une rampe de brûleurs. Le flammage peut d'ailleurs être réalisé avant l'application des hautes fréquences.

Dans l'étape suivante, on applique une enduction adhésive 700 telle que précitée (poste 7), puis un réseau de type polyester 800 (poste 8).

Enfin, la couche plastique externe 900 est appliquée, poste 9, par exemple du polyéthylène ou du polyéthlène réticulé.

Tous ces postes sont schématisés sur la figure 1, qui montre encore un dérouleur 3 de bande métallique, aluminium par exemple, un enrouleur 10 du tube fini et des contrôles 11, 12 et 13 respectivement pour le contrôle dimensionel, le contrôle de la soudure et le contrôle dimensionel et de surface du tube fini.

La figure 3 montre le formage du tube métallique 300 autour du tube plastique interne 100. Les figures 3.1 à 3.3 sont pendant le formage proprement dit (coupe III.2 par exemple de la figure 1). La figure 3.4 est une coupe selon III.4 et la figure 3.5 selon III.5. Le tube formé est calibré et va encore recevoir la couche externe 900 après application de l'adhésif 700 et du réseau 800.

On obtient ainsi un tube métallique composite plastique - métal - plastique qui présente des avantages de légèreté, solidité, formabilité et de résistance à la corrosion. D'une façon générale, il rassemble les qualités du métal et du plastique en éliminant les plus graves inconvénients.

Ce type de tube peut être utilisé pour véhiculer des fluides froids et chauds, éventuellement sous pression, des fluides agressifs, des gaz etc. Il s'utilisera de façon très avantageuse pour des installations de chauffage, notamment de chauffage par le sol.

Enfin, il convient de préciser que le tube est déformable manuellement ou à l'aide d'une cintreuse, selon son diamètre ou la rigidité de ses composants; il conserve la forme, par exemple la courbure, donnée.

**Revendications**

1. Procédé de fabrication d'un tube composite plastique - métal- plastique, dans lequel on prépare par extrusion un tube plastique intérieur (100) et on formé autour de celui-ci un tube métallique (300) qu'on recouvre d'une couche plastique extérieure (900), le tube métallique (300) étant formé à un diamètre intérieur sensiblement supérieur au diamètre extérieur du tube plastique intérieur (100) et ce tube métallique (300) étant fermé par soudage (40) bord à bord, caractérisé en ce qu'après le soudage, on réduit l'excédent de diamètre du tube métallique (300) sans l'étirer ni l'allonger, par passage dans un poste (6) de calibrage à galets.

2. Procédé selon la revendication 1, caractérisé en ce que le diamètre intérieur du tube métallique (300) excède le diamètre extérieur du tube plastique intérieur (100) d'une valeur comprise entre 0,5 et 5%.

3. Procédé selon la revendication 1, caractérisé en ce qu'on intercale un réseau (800) entre le tube métallique (300) et la couche plastique extérieure (900).

4. Procédé selon la revendication 1, caractérisé en ce qu'entre le tube plastique intérieur (100) et le tube métallique (300), on intercale un revêment adhésif (200).

5. Procédé selon la revendication 1, caractérisé en ce qu'on ferme le tube métallique (300), bord à bord, par soudage (40) au plasma sous atmosphère inerte.

6. Procédé selon la revendication 5, caractérisé en ce qu'après réduction du diamètre du tube métallique (300), on chauffe celui-ci par application de hautes fréquences.

7. Procédé selon la revendication 1 ou 3, caractérisé en ce qu'entre le tube métallique (300) et la couche plastique extérieure (900), on intercale un revêtement adhésif (700).

8. Procédé selon la revendication 1, caractérisé en ce que le tube plastique intérieur (100) et la couche plastique extérieure (900) sont constitués d'un matériau choisi dans le groupe comprenant les polyoléfines, matières plastiques fluorées, polyamides et élastomères.

9. Procédé selon la revendication 1, caractérisé en ce que le tube métallique (300) est en aluminium ou alliage d'aluminium.

10. Procédé selon la revendication 3, caractérisé en ce que le réseau (800) est un réseau textile en polyester stabilisé ou en polyamide.

11. Procédé selon la revendication 4 ou 7, caractérisé en ce que l'adhésif (200,700) est un ionomère, un EVA ou un polyéthylène modifié.

## Claims

1. A process for the production of a plastics - metal - plastics composite tube, in which an inner plastic tube (100) is prepared by extrusion and a metallic tube (300) is formed around this tube, which metallic tube is covered with an outer plastics layer (900), the metallic tube (300) being formed with an inner diameter which is substantially greater than the outer diameter of the inner plastics tube (100) and the metallic tube (300) being sealed by butt welding (40), characterised in that after sealing the excess diameter of the metallic tube (300) is reduced without the tube stretching or elongating, by passing into a calibration station (6).

2. A process according to claim 1, characterised in that the inner diameter of the metallic tube (300) exceeds the outer diameter of the inner plastics tube (100) by a value of from 0.5 to 5%.

3. A process according to claim 1, characterised in that a mesh (800) is inserted between the metallic tube (300) and the outer plastics layer (900).

4. A process according to claim 1, characterised in that an adhesive coating (200) is inserted between the inner plastics tube (100) and the metallic tube (300).

5. A process according to claim 1, characterised in that the metallic tube (300) is sealed, edge to edge, by plasma welding (40) under an inert atmosphere.

6. A process according to claim 5, characterised in that, after the diameter of the metallic tube (300) has been reduced, the tube is heated by applying high frequencies.

7. A process according to claim 1 or claim 3, characterised in that an adhesive coating (700) is inserted between the metallic tube (300) and the outer plastics layer (900).

8. A process according to claim 1, characterised in that the inner plastics tube (100) and the outer plastics layer (900) consist of a material selected from the group of polyolefins, fluorinated plastics materials, polyamides and elastomers.

9. A process according to claim 1, characterised in that the metallic tube (300) is of aluminium or aluminium alloy.

10. A process according to claim 3, characterised in that the mesh (800) is a textile mesh of stabilized polyester or polyamide.

11. A process according to claim 4 or claim 7, characterised in that the adhesive (200, 700) is an ionomer, an EVA or a modified polyethylene.

## Patentansprüche

1. Verfahren zur Herstellung eines Kunststoff-Metall-Kunststoff - Verbundrohres desjenigen Typs, bei dem man im Wege der Extrusion ein inneres Kunststoffrohr (100) erzeugt und darüber ein metallisches Rohr (300) formt, welches man mit einer äußeren Kunststoffschicht (900) bekleidet, wobei das metallische Rohr (300) mit einem Innendurchmesser ausgebildet ist, der merklich über dem Außendurchmesser des inneren Kunststoffrohres (100) liegt, und dieses metallische Rohr (300) durch Randverschweißung (40) geschlossen wird, dadurch gekennzeichnet, daß man nach dem Verschweißen den Überschuß des Durchmessers des metallischen Rohres (300) ohne Streckung und ohne Verlängerung desselben in einer Rollen-Kalibrierstation (6) reduziert.

2. Verfahren nach Anspruch 1, dadurch gekennzeichnet, daß der Innendurchmesser des metallischen Rohres (300) den Außendurchmesser des inneren Kunststoffrohres (100) um einen Wert zwischen 0,5 und 5 % übersteigt.

3. Verfahren nach Anspruch 1, dadurch gekennzeichnet, daß man ein Geflecht (800) zwischen das metallisches Rohr (300) und die äußere Kunststoffschicht (900) einbringt.

4. Verfahren nach Anspruch 1, dadurch gekennzeichnet, daß man zwischen das innere Kunststoffrohr (100) und das metallische Rohr (300) eine Klebstoffbeschichtung (200) einbringt.

5. Verfahren nach Anspruch 1, dadurch gekennzeichnet, daß man das metallische Rohr (300) Kante-an-Kante durch Plasmaschweißen (40) in Schutzgasatmosphäre (40) schließt.

6. Verfahren nach Anspruch 5, dadurch gekennzeichnet, daß man nach dem Reduzieren des Durchmessers des metallischen Rohres (300) dieses mittels Hochfrequenz-Anwendung erhitzt.

7. Verfahren nach Anspruch 1 oder 3, dadurch gekennzeichnet, daß man zwischen das metallische Rohr (300) und die äußere Kunststoffschicht (900) eine Klebstoffbeschichtung (700) einbringt.

8. Verfahren nach Anspruch 1, dadurch gekennzeichnet, daß das innere Kunststoffrohr (100) und die äußere Kunststoffschicht (900) aus einem Material der Polyolefine, Fluorkunsstoffe, Polyamide und Elastomere enthaltenden Werkstoffgruppe bestehen.

9. Verfahren nach Anspruch 1, dadurch gekennzeichnet, daß das metallische Rohr (300) aus Aluminium oder einer Aluminiumlegierung besteht.

10. Verfahren nach Anspruch 3, dadurch gekennzeichnet, daß das Geflecht (800) ein textiles Geflecht aus verstärktem Polyester oder aus Polyamid ist.

11. Verfahen nach Anspruch 4 oder 7, dadurch gekennzeichnet, daß der Klebstoff (200, 700) ein Ionomer, ein Ethylen-Vinyl-Acetat (EVA) oder ein modifiziertes Polyäthylen ist.

EP 0 154 931 B1

FIG. 1

FIG. 2

FIG. 3

FIG. 4

6